(19) Europäisches Patentamt

European Patent Office

Office européen des brevets

(11) **EP 2 159 464 A2**

(12) **EUROPEAN PATENT APPLICATION**

(43) Date of publication:
**03.03.2010 Bulletin 2010/09**

(51) Int Cl.:
***F16L 13/11*** *(2006.01)*

(21) Application number: **09166963.0**

(22) Date of filing: **31.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.07.2008 US 183761**
**21.01.2009 US 357176**

(71) Applicant: **Mueller Industries, Inc.**
**Memphis TN 38125 (US)**

(72) Inventor: **Jamison, Tommy**
**Hernando, MS 38632 (US)**

(74) Representative: **Stuttard, Garry Philip**
**Urquhart-Dykes & Lord LLP**
**Tower North Central**
**Merrion Way**
**Leeds LS2 8PA (GB)**

(54) **Coupling, joint and method for fixedly and sealingly securing components to one another**

(57)　　A method for forming a joint, the method including: providing a fitting (14) having a body (20) and a pair of axially spaced apart seals (22a,22b), the body (20) having an insertion end; providing a structure (12); engaging the fitting (14) and the structure (12) to one another such that the seals (22a,22b) sealing engage the body (20) and the structure (12); and after the fitting (14) and the structure (12) have been engaged to one another, installing an adhesive (16) to a zone disposed between the body (20), the structure (12) and the seals (22a,22b) to retain the body (20) to the structure (12). A fitting (14) and an assembly are also provided. The fluid conduit assembly having a fitting (14) assembly and a pair of hollow structures (12) that are received into a body (20) of the fitting assembly. The fitting assembly includes a body (20) and two sets of seals (22a,22b) that are engaged to the body (20) and to an associated one of the hollow structures (12). An adhesive (16) is employed to fixedly or fixedly and sealingly couple the hollow structures (12) to the body (20). The body (20) is configured to space the hollow structures (12) apart from one another to tailor the rate at which heat is introduced to the portion of the body (20) of the fitting (14) between the two sets of seals (22a,22b) to reduce thermally induced shear stress acting on the adhesive (16). A method for forming a fluid conduit assembly is also provided.

Fig-9

**Description**

The present invention generally relates to a coupling, joint and method for fixedly and sealingly securing components to one another.

There has long been a need for joining two components in a manner that fixedly and sealingly couples the components to one another. One extremely common application concerns the coupling of copper tubing that is commonly employed to transmit potable water in a building.

Sweat soldering has long been used for the connection of components of copper based supply and distribution systems for potable water, especially in single family residential constructions, due to its durability and the relative ease with which lead-based solder connections could be made. Modern plumbing codes have mandated lead-free solders and water soluble fluxes and as such, the difficulty in making sweat solder connections has significantly increased, particularly where relatively large diameter copper tubing is utilized. More particularly, the lead-free solders and water soluble fluxes tend to be less tolerant of certain variables (e.g., the presence of oxidation and/or the use of excessive heat) than the lead-based solders and acid-based fluxes. Furthermore, sweat soldering can be relatively time consuming.

In an effort to eliminate the disadvantages of sweat solder connections, it was proposed that a two-part epoxy be employed to adhesively couple the tubing and connectors to one another. More specifically, it is known to apply a two-part epoxy adhesive between a copper tube and a copper fitting (the copper fitting being suitable for coupling to the copper tube via traditional sweat soldering). Such epoxies have performed well in fixedly coupling components to one another but have not performed well in forming a seal between the components. Our analyses reveal a failure mode wherein the sliding of the fitting onto the tubing (or the tubing into the fitting) has the effect of scraping the epoxy off relatively small portions of the tubing and/or the fitting so that a void was formed therebetween. While the epoxy generally has sufficient strength to couple the fitting and the tubing together, the presence of the void rendered the joint unsuitable for its intended function (e.g., to communicate a fluid, such as potable water or a refrigerant therethrough without leaking).

Another connection process that has been proposed employs fittings that utilize internal seals wherein the fittings are crimped directly to lengths or sticks of conventional hard drawn copper tubing. The Profipress system that is marketed by Viega GmbH & Co. KG of Attendorn, Germany, for example, includes an inner o-ring seal that is carried on an inner diameter of the fitting and which sealingly engages the copper tubing upon insertion into the fitting. A crimping tool is subsequently employed to crimp the fitting to the tubing to thereby fixedly couple the tubing and the fitting to one another. This system, however, is known to suffer from several drawbacks.

One such drawback concerns the sealing of the fitting to an outside surface of the copper tubing. It is well known in the art that the outside surface of a copper tube is relatively susceptible to imperfections (e.g., gouges, scratches and the like) during its formation via extrusion as well as to damage during shipping and storage. As such imperfections and damage may adversely affect the ability of the fittings to seal against the outer surface of the tubing, manufacturers of the copper tubing typically subject the extruded sticks of tubing to an eddy current test to verify the integrity of each stick's outside surface. This testing is costly and as we have found, leaks are possible even when the tubing conforms to published standards. Accordingly, it appears that a relatively time consuming manual inspection must be made of each tube prior to its coupling to a fitting.

Another drawback concerns the incompatibility of the known systems with lengths of annealed copper tubing. In this regard, the annealed copper tubing is readily deformable and thus the crimping process fails to secure the fitting and the annealed copper tubing together. Accordingly, plumbing contractors must equip themselves with two discrete sets of fittings: one set of crimp fittings that are compatible with the hard drawn sticks of tubing and another set of fittings (e.g., flare or compression fittings) that are compatible with the annealed coils of tubing.

Yet another drawback concerns the cost of the crimp-type fittings and the tooling for installing the crimp-type fittings. More specifically, the fittings are relatively heavy and can weigh 25% or more than a correspondingly sized sweat solder fitting. As copper is relatively expensive, the manufacture and use of these fittings can be disadvantageous from a cost perspective. Moreover, the tooling for installing (i.e., crimping) the fittings tends to be relatively expensive. As such, it can be relatively costly to equip a crew so that it will have the capability to install such fittings.

A further drawback concerns the joining of conduits in relatively high pressure applications, such as cooling or refrigerant systems that utilize the new high pressure refrigerants such as R410A and others. More specifically, the known crimp-type fittings appear to be incapable of use in relatively high pressure applications as the fitting tends to separate from the tube when subjected to elevated fluid pressures. Soldering or brazing can also be undesirable in high pressure applications where the fluid conduit is hard drawn (i.e., work hardened). The application of heat to facilitate the soldering or brazing operation can anneal the conduit and thereby significantly lower its tensile strength.

In view of the aforementioned disadvantages with the known connection systems, there remains a need in the art for a connection system that can be used to fixedly and sealingly couple components together that is both reliable and relatively inexpensive.

This section provides a general summary of some aspects of the present disclosure and is not a comprehensive listing or detailing of either the full scope of the disclosure or all of the features described therein.

In one form, the present teachings provide a method for forming a joint. The method includes: providing a fitting having a body and a pair of axially spaced apart seals, the body having an insertion end; providing a structure; engaging the fitting and the structure to one another such that the seals sealing engage the body and the structure; and after the fitting and the structure have been engaged to one another, installing an adhesive to a zone disposed between the body, the structure and the seals to retain the body to the structure.

In another form, the present teachings provide fitting that includes a body, a first seal and a second seal. The body has an insertion end with an end face. The body defines a cavity with a first mount, a second mount, a fill aperture and a vent aperture. The second mount is spaced axially apart from the first mount. The first seal is received in the first mount and the second seal is received in the second mount. The fill aperture and the vent aperture extend radially through the body and are disposed between the first and second seals.

In yet another form, the present teachings provide a fitting assembly for a fluid conduit assembly. The fitting assembly includes a fitting body, a plurality of seals and at least one tube stop. The fitting body has an inlet and an outlet that are disposed concentrically about a straight line that is coincident with a longitudinal axis of the fitting body. The fitting body is configured to receive first and second tubes therein. The seals are spaced axially apart from one another along the straight line and cooperate with the fitting body to establish first and second adhesive coupling zones that are configured to receive an adhesive for fixedly or fixedly and sealingly coupling the fitting body to the first and second tubes, respectively. The at least one tube stop is coupled to the fitting body and establishes a tube stop zone that is configured to axially separate the first and second tubes from one another along the straight line. The tube stop zone has a length LT that is configured to receive heat from the fluid which is conducted through the fitting body to a first portion of the fitting body corresponding to the first adhesive coupling zone and a second portion of the fitting body corresponding to the second adhesive coupling zone. The fitting body is dimensioned such that a 110°F change in a temperature of the fluid as the fluid flows through the fluid conduit assembly will not create a temperature differential between a temperature of the first portion of the fitting body and a temperature of another portion of the fitting body that exceeds 20°F.

In still another form, the present teachings provide a method for forming a fitting for coupling a pair of tubes along a straight axis. The fitting includes a fitting body with a pair of opposite ends and at least one stop between the opposite ends. An adhesive coupling zone is associated with each of the opposite ends. Each of the tubes is adapted to be received in an associated one of the ends and adhesively bonded to the fitting body over at least a portion of an associated one of the adhesive coupling zones. The method includes: selecting a length of the adhesive coupling zones; determining a first rate of heat transfer through an adhesive in one of the adhesive coupling zones based in part on a first predetermined temperature differential; sizing a first portion of the fitting body between the one of the adhesive coupling zones and the at least one tube stop such that a second rate of heat transfer through the first portion of the fitting body is greater than or equal to two times the first rate of heat transfer, the second rate of heat transfer being based in part on the first predetermined temperature differential; and forming the at least one tube stop to space the tubes axially apart from one another to create a tube stop zone, the tube stop zone having a length such that a third rate of heat transfer through a second portion of the fitting body associated with the tube stop zone is greater than or equal to two times the second rate of heat transfer, the third rate of heat transfer being based in part on a second predetermined temperature differential that is less than the first predetermined temperature differential.

Further areas of applicability will become apparent from the description provided herein. It should be understood that the description and specific examples in this summary are intended for purposes of illustration only and are not intended to limit the scope of the present disclosure, its application and/or uses in any way.

The drawings described herein are for illustrative purposes only and are not intended to limit the scope of the present disclosure in any way. The drawings are illustrative of selected teachings of the present disclosure and do not illustrate all possible implementations. Similar or identical elements are given consistent identifying numerals throughout the various figures.

Figure 1 is a schematic illustration of an assembly constructed in accordance with the teachings of the present disclosure;

Figure 2 is a side elevation view of a portion of the assembly of Figure 1 illustrating an exemplary joint that includes a pair of tubular structures, a fitting and an adhesive;

Figure 3 is a longitudinal section view of a portion of the assembly of Figure 1, illustrating the exemplary joint at a time before the adhesive is employed to fixedly couple the tubular structures and the fitting to one another;

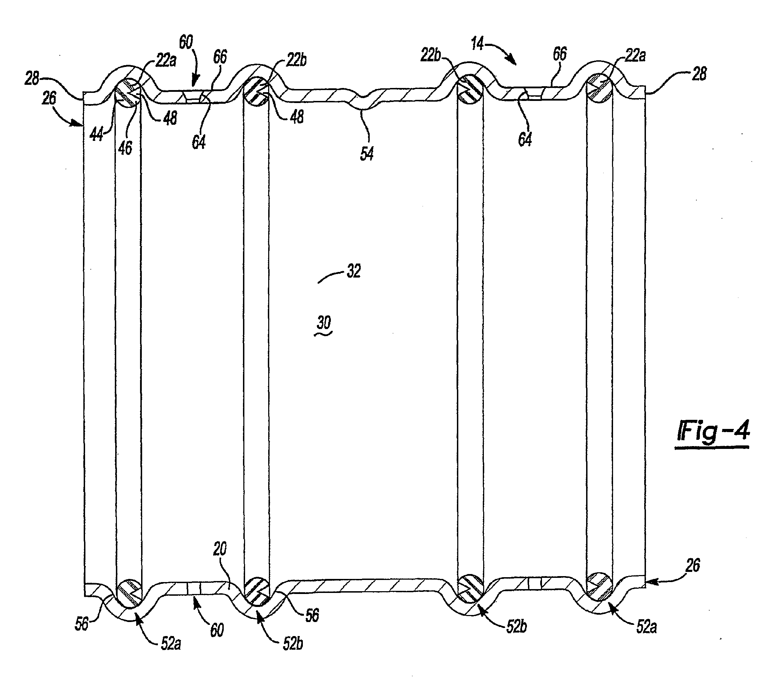

Figure 4 is a longitudinal section view of the fitting;

Figure 5 is a sectional view of a portion of an alternatively constructed fitting taken perpendicular to the longitudinal axis of the fitting and through the apertures in the body;

Figure 6 is a longitudinal sectional view of a portion of another alternatively constructed fitting;

Figures 7 through 9 are partial sectional views illustrating the introduction of the adhesive to the fitting;

Figure 10 is an exploded perspective view of a portion of an alternately constructed joint in which a structural member has been modified to include a locking element;

Figures 11 and 12 are perspective views of structures with alternately constructed locking members;

Figure 13 is a longitudinal section view of a joint that employs the structure of Figure 12;

Figure 14 is a side elevation view of an exemplary tool employed for forming the locking member illustrated in Figure 12;

Figure 15 is a top view of a portion of the tool of Figure 14 illustrating the knurling wheels in more detail;

Figure 16 is a longitudinal section view of a portion of another assembly constructed in accordance with the teachings of the present disclosure;

Figure 17 is a longitudinal cross section view of a portion of yet another assembly constructed in accordance with the teachings of the present disclosure;

Figure 18 is a schematic cross section view of a fluid conduit system that incorporates the assembly of Figure 17;

Figure 19 is a plot illustrating a temperature differential of an elbow fitting illustrated in Figure 18 during a thermal cycling test;

Figure 20 is a plot illustrating a temperature differential of the fitting illustrated in Figure 17 during the thermal cycling test;

Figure 21 is a plot illustrating a temperature differential of a union-type fitting during the thermal cycling test, the union-type fitting being similar in configuration to the fitting of Figure 17 but employing a stop that spaces the tubes inserted therein relatively close together; and

Figure 22 is a longitudinal cross section view of a portion of still another assembly constructed in accordance with the teachings of the present disclosure.

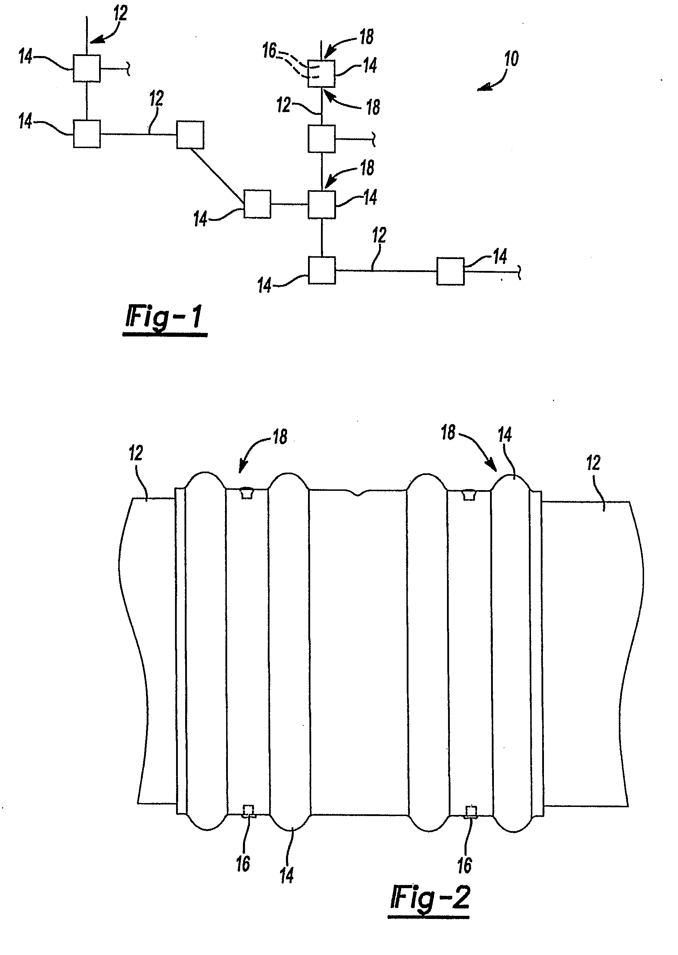

With reference to Figure 1 of the drawings, an assembly constructed in accordance with the teachings of the present invention is schematically illustrated and is generally indicated by reference numeral 10. With additional reference to Figure 2, the assembly 10 can include a component or structure 12, a fitting 14, and an adhesive 16 that can cooperate to form a joint 18. In the particular example illustrated, the assembly 10 is suited for use in communicating (i.e., supplying, delivering, routing) a fluid, such as a gas or liquid and as such, the structure 12 is illustrated to be a length of tubing. More particularly, the structure 12 in the particular embodiment illustrated is a length of drawn (full hard) copper tubing that is suitable for use in a system for the transmission of potable water. It will be appreciated, however, that the teachings of the present invention have broader applicability and as such, the scope of the present disclosure (and appended claims) is not limited to the particular application of the invention described and illustrated herein but rather extends to any joint wherein the components of the joint are fixedly or fixedly and sealingly joined by an adhesive in the manner disclosed herein. In this regard, it will be appreciated that the structure 12 need not be a tubular structure but rather could be any structure, such as a shaft, that sufficiently corresponds in size and shape to the fitting 14 so that the adhesive 16 may cooperate with the two to form a connection or joint 18.

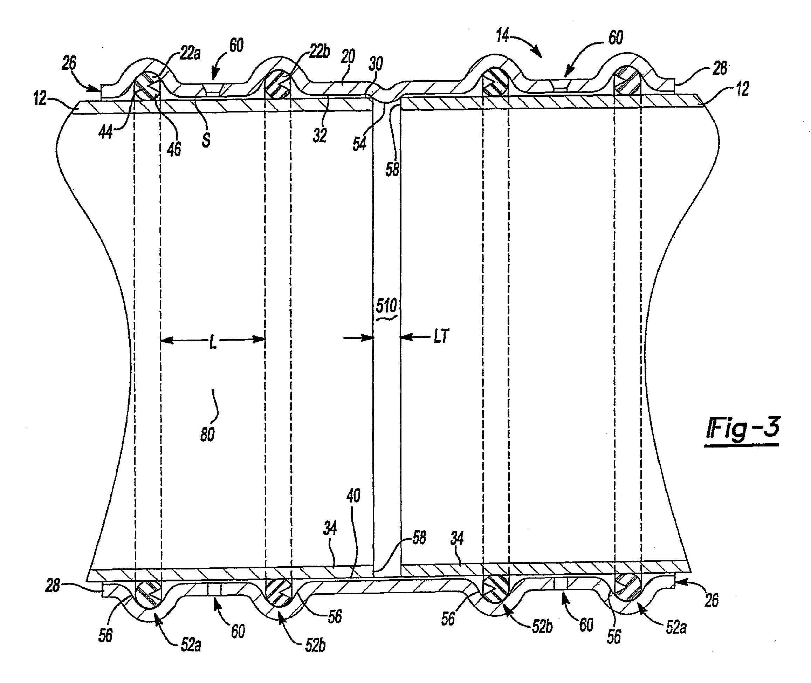

With reference to Figures 2 and 3, the fitting 14 can include a body 20 and a pair of sealing elements 22a and 22b. It will be appreciated that although the particular fitting illustrated is a straight union, the teachings of the present invention have applicability to various other types of fittings, including elbows, tees, caps, adapters, reducers, bushings, etc.

The body 20 can be made from any structural material, such as plastic, copper, brass, bronze, stainless steel or another metal. In the example provided, the body 20 is made of a copper alloy so as to eliminate the potential for a galvanic reaction with the copper alloy of the structure 12. The body 20 can include an insertion end 26 that can define an end face 28 and a cavity 30 having an interior surface 32. The cavity 30 can be configured to receive an associated end 34 of the structure 12.

The sealing elements 22a and 22b can be sized to support and the associated end 34 of the structure 12 within the cavity 30 and sealingly engage both the body 20 and the exterior surface 40 of the associated end 34 of the structure so that the exterior surface 40 is spaced apart from the interior surface 32 of the cavity 30 to form a space S therebetween. In the particular example provided, the sealing elements 22a and 22b are engineered lip seals having a body 44 and a lip member 46 that cooperate to form an annular seal cavity 48. As the example provided relates to a system for communicating a fluid, the sealing elements 22a and 22b are configured to sealingly engage the interior surface 32 and the exterior surface 40. Those of skill in the art will appreciate from this disclosure that other types of seals, including O-rings, could be used and that in situations where the formation of a seal is unnecessary, one or both of the sealing elements 22a and 22b could be formed of a material that does not form a seal against one or both of the interior surface 32 and the exterior surface 40.

The body 20 can include a pair of mounts 52a and 52b and a stop 54. Each of the mounts 52a and 52b can be spaced axially apart from one another and can be configured to hold and position an associated one of the sealing elements 22a and 22b, respectively. In the particular example provided, the mounts 52a and 52b have a flattened U-shape with a root 52r that is sized to engage a corresponding one of the sealing elements 22a and 22b and leg portions 52s that are coupled to and diverge outwardly from the root 52r so that they do not contact the sealing elements 22a and 22b. The stop 54 can be a feature that can inhibit the insertion of the structure 12 into the cavity 30 beyond a predetermined distance. In the particular example provided, the mounts 52a and 52b are annular U-shaped grooves 56 that are spaced apart to receive an associated one of the sealing elements 22a and 22b therebetween, while the stop 54 comprises a dimple that is formed in the body 20 inwardly from the insertion end 26, past the sealing elements 22a and 22b. The dimple can extend radially inwardly into the cavity 30 to an extent where it will contact the end face 58 of the structure 12 to inhibit further insertion of the structure 12 into the cavity 30. The mounts 52a and 52b and the stop 54 are elements that are well known in the art and as such, a detailed discussion of their configuration and/or operation is not needed herein.

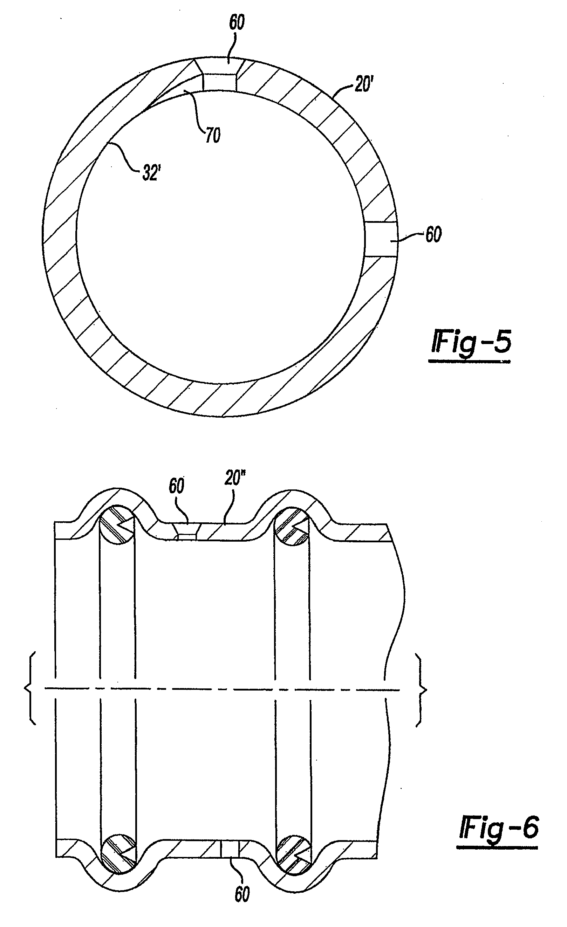

The body 20 can also define two or more apertures 60 that can be positioned between the sealing elements 22a and 22b and which can extend into the cavity 30. The apertures 60 can be formed in any desired process, such as drilling or punching. If the apertures 60 are formed via punching, for example, the interior surface 32 of the body 20 can be rolled after the apertures 60 are punched and while the mounts 52a and 52b are formed to remove any burr that may extend from the interior surface 32. If the apertures 60 are formed in a drilling operation, a center drill (not shown) or similar tool bit can be employed in the drilling operation such that a chamfer or countersink 64 is formed on the outer surface 66 of the body 20. The countersink 64 can be formed with a predetermined interior angle, such as an interior angle of about 60 degrees. In the particular example illustrated, one of the apertures 60 is punched and the other one of the apertures 60 is formed with a center drill in a drilling operation for purposes of illustration only. Also in the particular example illustrated, only two of the apertures 60 are provided between each set of sealing elements 22a and 22b and the apertures 60 are disposed at the same distance from the end face 28 but spaced circumferentially 180 degrees apart from one another. It will be appreciated, however, that the apertures 60 can be disposed at any desired circumferential and/or axial position. In the example of Figure 5, the body 20' is configured such that the apertures 60 are spaced circumferentially apart from one another by an angle of 90 degrees. In this example, a flow directing feature 70 is formed onto or coupled to the interior surface 32 to aid in directing the adhesive 16 (Fig. 1) in a predetermined direction (i.e., counter-clockwise in the example provided). In the example of Figure 6, the body 20" is configured such that the apertures 60 are axially spaced apart from one another.

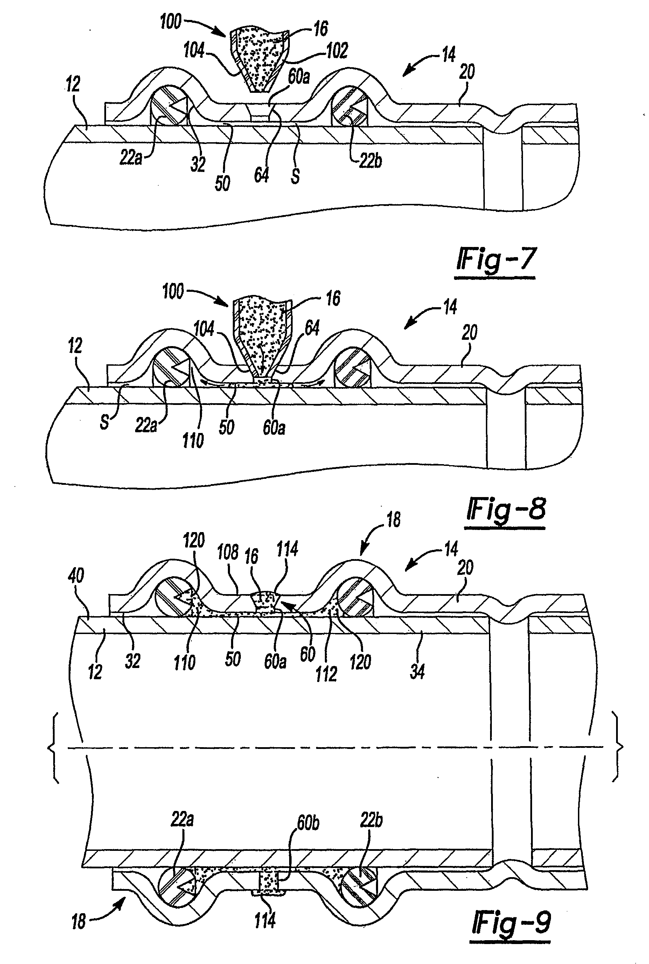

With reference to Figure 9, the adhesive 16 can be any appropriate adhesive for bonding the structure 12 and the body 20 to one another. In the particular example provided, the adhesive 16 is a two-part epoxy, such as the DP460 Scotch-Weld™ epoxy adhesive that is marketed by Minnesota Mining and Manufacturing, Inc. of St. Paul, Minnesota, but it has been found that other adhesives, including the DP100 Plus Scotch-Weld™ epoxy adhesive and the DP-810NS Scotch-Weld™ acrylic adhesive that are marketed by Minnesota Mining and Manufacturing, Inc. of St. Paul, Minnesota are also well suited for the exemplary assembly 10 described and illustrated herein. Those of ordinary skill in the art will appreciate that numerous considerations factor into the selection of a particular adhesive, including the shear strength of the adhesive, the peel strength of the adhesive, the viscosity of the adhesive, the worklife of the adhesive, the cure time of the adhesive, the cost of the adhesive, the chemical reactivity of the adhesive, the material compositions of the structure 12 and the fitting 14, the amount of clearance between the exterior surface 40 of the structure 12 and the interior surface 32 of the body 20, the working temperature of the assembly, and the amount of vibration (i.e., amplitude and frequency) that is transmitted through the assembly. Accordingly, it will be appreciated that the adhesive 16 is not limited to the particular adhesives that are specifically disclosed herein or to epoxy adhesives and/or acrylic adhesives generally.

With specific reference to Figure 3, the sealing elements 22a and 22b can be spaced axially apart from one another define a coupling zone 80 therebetween having a length L. The length L of the coupling zone 80 can be selected to provide sufficient area so that the adhesive 16 (Fig. 9) will be sufficiently strong to fixedly couple the structure 12 and the body 20 to one another so that the joint 18 (Fig. 9) can be subjected to a predetermined (maximum) pressure without failure of the joint 18 (Fig. 9). As the adhesive 16 (Fig. 9) is disposed between the sealing elements 22a and 22b, a first one of the sealing elements 22a can be positioned relatively close to the end face 28 of the body 20. Various methods may be employed to determine the length L of the coupling zone 80. For example, the length L may be related to the internal diameter of the body 20 of the fitting 14 in a desired manner. In one example that relates to fittings for use with tubes a nominal outside diameter from 1.375 inches to 4 inches, the following formula can be employed to approximate the length L:

$$L = 0.5279 \times \sqrt{\sqrt[4]{\left(1 - \frac{1}{C_{ID}}\right) \times \sqrt{C_{ID}}} - \frac{1}{C_{ID}^2}}$$

where $C_{ID}$ is the inside diameter of the portion of the fitting corresponding to the coupling zone 80. Another method for sizing the length L is to size the length L such that it achieves a desired burst pressure at a given temperature for a particular sized fitting as specified in an ASME standard (e.g., ASME B16.22 (1995), the disclosure of which is hereby incorporated by reference as if fully set forth in detail herein). It will be appreciated that achievement of a desired burst pressure will be dependent upon the type of adhesive employed (e.g., the lap strength of the adhesive), the thickness of the adhesive, the area over which the adhesive will be distributed and the uniformity of the adhesive (e.g., lack of voids). A desired pressure (P), such as a burst pressure, can be converted to a desired force (F) by multiplying the burst pressure by the cross-sectional area of the internal space within the fitting (i.e., $F = P \times \pi \times CID^2$, where CID is the interior diameter of the portion of the body 20). The desired force can be correlated to a lap force (LF) in a desired manner. For example, we were able to derive the following equations for estimating lap force (LF) as a function of desired force (F):

$$\text{Equation (1): } 2.2884 \, (F) - 2381.592 = LF;$$

and

$$\text{Equation (2): } 6.9382 \times 10^{-5}[(F)-6230.56]^2 + 1.81056(F) - 1700.752 = LF,$$

where F is in pounds force and LF is in pounds force. Equation (1) is associated with an R-square value of .9724 and a probability of less than 0.0001 that the data does not fit the equation. Equation (2) is associated with an R-square value of .9938 and a probability of less than 0.0001 that the data does not fit the equation. The lap force (LF) can be divided by the product of the lap shear strength of the adhesive (AS), pi and the interior diameter of the portion of the body 20 to determine the length L (i.e., $(LF)/(AS \times \pi \times CID) = L$).

With reference to Figures 7 through 9, the fitting 14 can be dry fitted to the structure 12 such that the sealing elements 22a and 22b can be sealingly engaged to the interior surface 32 of the body 20 and the exterior surface 40 of the associated end 34 of the structure 12. Depending upon the type of material or materials used for the body 20 and the structure 12, it may be desirable or necessary to clean the interior surface 32 and/or the exterior surface 40. In the particular example provided, the interior surface 32 of the body 20 was not cleaned, but the exterior surface 30 of the structure 12 was cleaned by initially sanding the exterior surface 30 with sandpaper of an appropriate grit (e.g., 120 grit) and thereafter applying an alcohol solvent to the surface 30. The dry friction between the structure 12 and the fitting 14 can be tailored to a desired level by selection of the type of seals employed for the sealing elements 22a and 22b and their geometry. In the particular example provided, the dry friction between the structure 12 and the fitting 14 is relatively high so that it would not be necessary to prop up vertically oriented portions of the assembly 10 (Fig. 1), if any, while the adhesive 16 in the coupling zone 50 cures, even when the structure 12 is relatively large and heavy (e.g., a metal tube or pipe having a nominal diametrical dimension that is greater than or equal to two inches). In the example provided, the surface contact obtained with the engineered lip seals is 60% greater than the surface contact with conventional O-ring seals. As it is possible to dry-fit the assembly 10 (Fig. 1), in whole or in part as desired, cure times for the adhesive 16 can be relatively low. It will be appreciated, however, that the adhesive 16 could be selected from adhesives having broadly different cure times (e.g., from 20 minutes or less to more than 8 hours) to meet the needs of a given situation.

An applicator 100 with a nozzle 102 can be employed to introduce the adhesive 16 into the coupling zone 50. The applicator 100 can include a means for dispensing the adhesive 16 (e.g., a pump), which can be operated in any desired manner, including manually, pneumatically and/or electrically. Suitable applicators are available commercially from several sources, such as the Scotch-Weld EPX Plus II applicator marketed by the Minnesota Mining and Manufacturing, Inc. of St. Paul, Minnesota. In the particular example provided, the one of the apertures 60 with the countersink 64 is employed to directly receive the adhesive 16 (this aperture 60 will be referred to hereinafter as "the fill aperture 60a") and the nozzle 102 includes a frusto-conical tip 104 having an included angle that matches the included angle of the countersink 64. Construction in this manner can help to align the nozzle 102 to the fill aperture 60a, while mating engagement between the tip 104 and the countersink 64 can aid in preventing adhesive from being dispensed over the outer surface 108 of the body 20. It will be appreciated however, that either one of the apertures 60 could be employed to directly receive the adhesive 16.

The adhesive 16 can be dispensed (e.g., pumped) through the nozzle 102 and the fitting 14 into the space S between the body 20 and the structure 12. We have found that the adhesive 16 will flow longitudinally toward the sealing elements 22a and 22b and will flow in a first annular channel 110 between the sealing member 22a and the mount 52a and in a second annular channel 112 between the sealing member 22b and the mount 52b. The adhesive 16 will flow out of the other aperture 60 (hereinafter referred to as "the vent aperture 60b") when the coupling zone 50 has been filled with the adhesive 16. The sealing elements 22a and 22b confine the adhesive 16 in the coupling zone 50 and as such, the adhesive 16 is not disposed in a portion of the cavity 30 in the body 20 that is in fluid communication with the interior of the structure 12 in the example provided. Moreover, as the coupling zone 50 has a predetermined volume, it is possible to meter a given volume of the adhesive 16 into the coupling zone 50 to ensure that a desired amount of the adhesive 16 is disposed within the joint 18 and to conserve the adhesive 16. Adhesive material 114 extending from the apertures 60 can be employed as a means of verifying that the joint 18 has been properly assembled.

Those of skill in the art will appreciate that the coupling zone 50 could be entirely filled with the adhesive 16 when the adhesive 16 begins to flow out of the vent aperture 60b, or that the coupling zone 50 could be partially filled with the adhesive 16 (i.e., there could be one or more voids in the adhesive 16 located in the coupling zone 50). In our experience, however, voids are not typically formed in the coupling zone 50.

As the seal between the structure 12 and the body 20 of the fitting 14 is formed by the sealing elements 22a and 22b rather than the adhesive 16, the presence of one or more voids (not shown) in the adhesive 16 located within the coupling zone 50 will not affect the sealing capacity of the fitting 14. Moreover, the adhesive need not bond to both the structure 12 and the body 20. In the example provided, the exterior surface 40 of the associated end 34 of the structure 12 was cleaned prior to assembly of the fitting 14 to the structure 12 and consequently, the adhesive 16 is well bonded to the exterior surface 40. After curing, the adhesive 16 is structural and can have a flattened, generally U-shape that defines a pair of annular projections 120 that extend into the channels 110 and 12, respectively. The annular projections 120 can inhibit axial movement of the fitting 14 relative to the structure 12.

As the task of sealing (which can be performed by the sealing elements 22a and 22b) is separate from the task of fixedly coupling the body 20 to the structure 12 (which can be performed by the adhesive 16 in the coupling zone 50), the body 20 and the structure 12 can be formed of different materials (e.g., CPVC, PVC, or stainless steel can be employed for the body 20, while copper can be employed for the structure 12). Through selection of the adhesive and/or treatment of the body 20, the adhesive 16 need not bond to the body 20 so that the sealing elements 22a and 22b can move depending on the differences in thermal expansion of the body 20 relative to the structure 12.

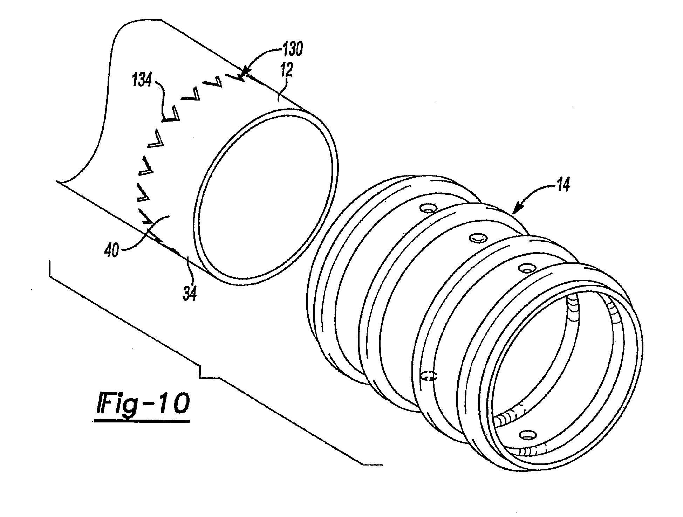

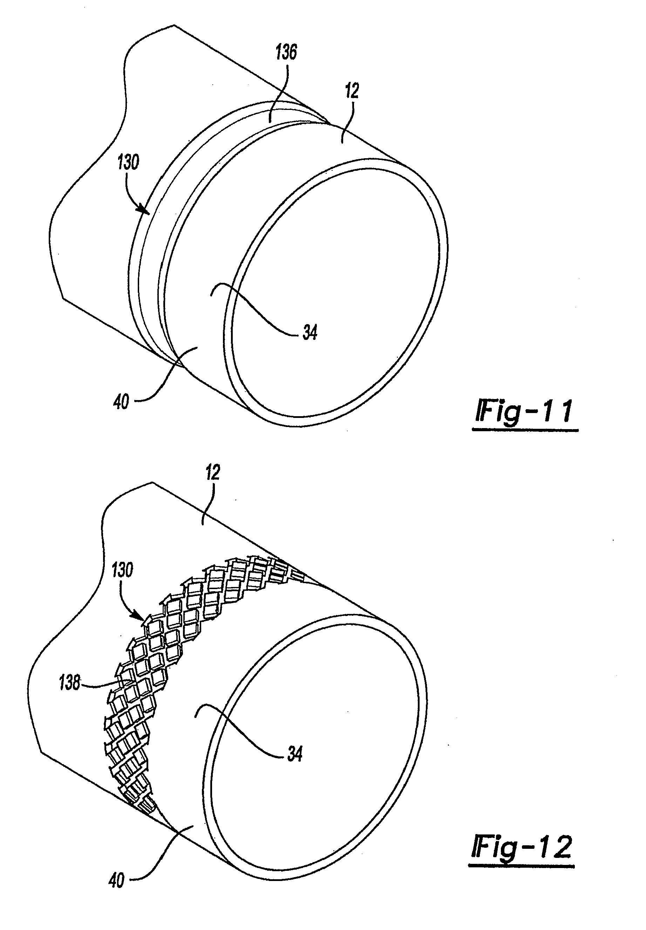

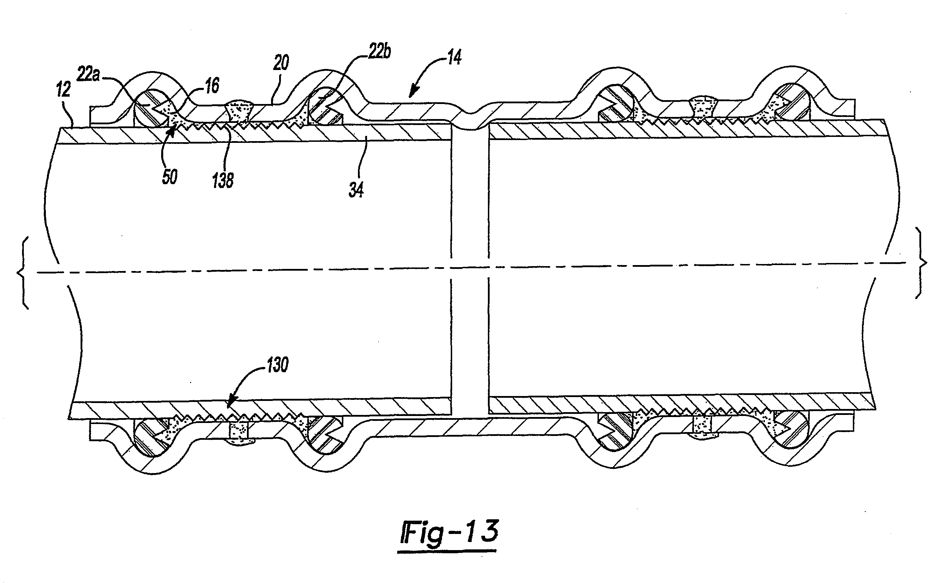

It will be appreciated that the associated end 34 of the structure 12 and/or the body 20 can be configured such that the adhesive 16 does not bond to either the structure 12 or the body 20. In the examples of Figures 10 through 13, a locking element 130 can be formed into the associated end 34 of the structure 12 in an area corresponding to the location of the coupling zone 50 (Fig. 13). In Figure 10, a plurality of dimples 134 are formed about the perimeter of the associated end 34 of the structure 12. The dimples 134 are illustrated to be generally V-shaped in the example provided, but could have any desired shape (e.g., a spherical segment). In the example of Figure 11, an annular groove 136 is formed about the perimeter of the associated end 34 of the structure 12. In the example of Figures 12 and 13, the exterior surface 40 of the associated end 34 of the structure 12 is knurled such that the knurled portion 138 has a diameter that is relatively larger than the diameter of the adjacent sections of the associated end 34 of the structure 12. In any of the examples of Figures 10 through 13, the adhesive 16 in the coupling zone 50 need not bond directly to the structure 12 but rather can be received into the dimples 134, the groove 136 and the knurls of the knurled portion 138 such that when the adhesive 16 has cured, the fitting 14 cannot be withdrawn from the structure 12. Accordingly, it will be appreciated that the adhesive 16 need not bond to one or both of the body 20 and the structure 12.

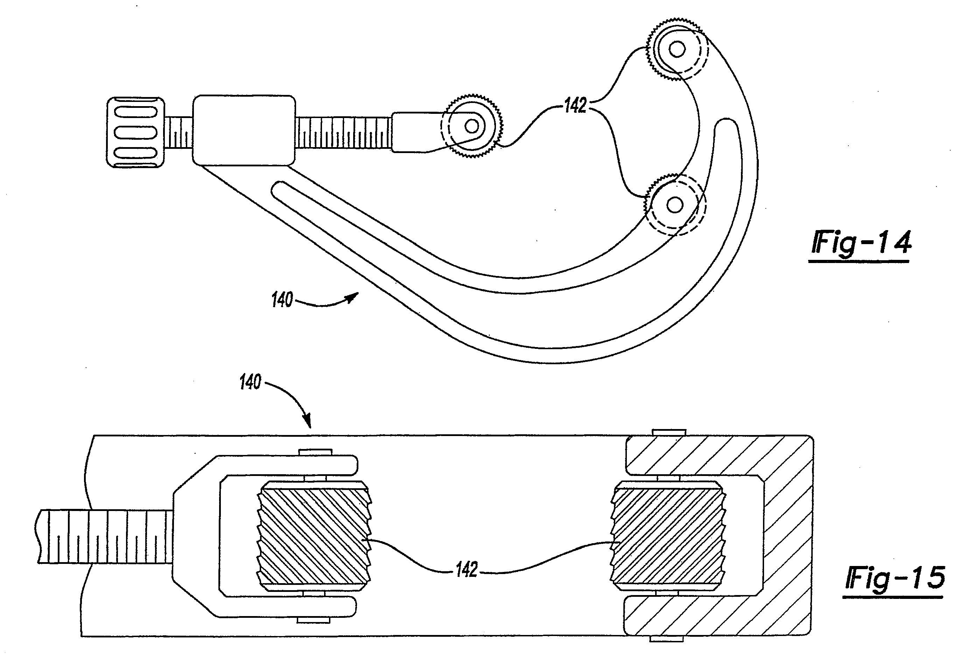

A suitable tool for forming the knurls of the knurled portion 138 is illustrated in Figures 14 and 15. The tool 140 can include a plurality of knurling wheels 142 that can be moved relative to one another to drive the knurling wheels 142 into the structure 12 (Fig. 13). Similar tools (not shown) can be employed to form the dimples 134 of Figure 10 or the groove 136 of Figure 11. Additionally, powered rotary forming tools for forming locking features, such as grooves, into tubing and piping are commercially available. One such line of tools is known as a Victaulic roll groover, but such tool may require modification to position the groove 136 (Fig. 11) relative to the end face 58 (Fig. 3) of the structure 12 (Fig. 3) in a desired location.

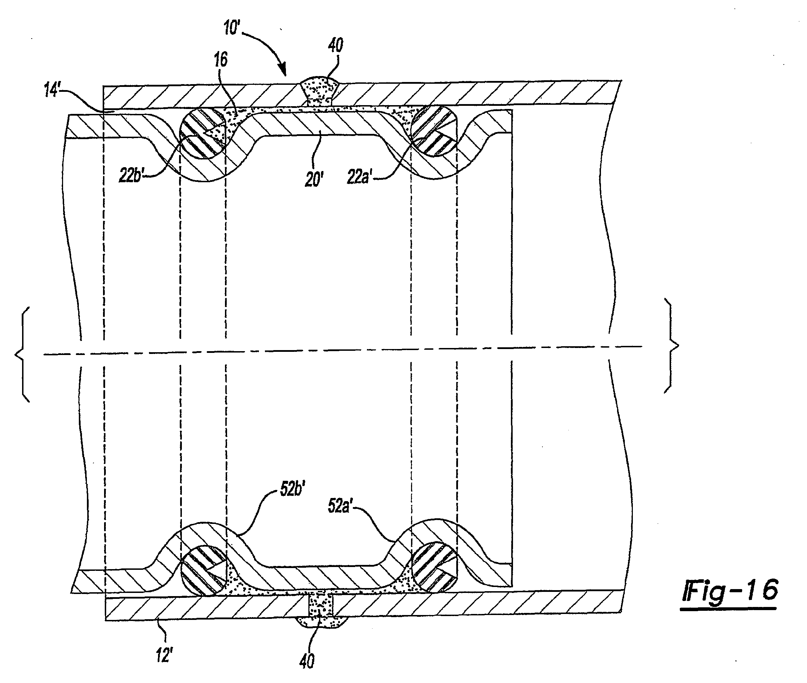

While the assembly 10 (Fig. 1) has been described thus far as including structures 12 (Fig. 3) that are received into a cavity 30 (Fig. 3) in a fitting 14 (Fig. 3), it should be appreciated that in the alternative, the fitting 14' could be received into the structure 12' as illustrated in Figure 16. In this example the apertures 60' are formed through the structure 12', the mounts 52a' and 52b' are configured to position the sealing elements 22a' and 22b' on the exterior of the body 20' and the adhesive 16 is received between the body 20' and the structure 12'.

It will be appreciated that the peel strength of the adhesive 16 and the lap shear strength of the joint 18 can be tailored to a desired level through selection of the type of adhesive 16, the length L of the coupling zone 50 and the amount of clearance between the exterior surface 40 of the associated end 34 of the structure 12 and the interior surface 12 of the cavity 30 (hereinafter referred to as "the diametrical clearance", although those of skill in the art will appreciate that the shapes of the structure 12 and the body 20 need not be circular). Depending on the particular requirements for a given situation, the diametrical clearance and the length L of the coupling zone 50 can be selected so as to increase or decrease the lap shear strength for a given adhesive 16. For example, the length L of the coupling zone 50 can be lengthened or shortened for a given adhesive 16 and a given diametrical clearance to provide more or less surface area over which the adhesive 16 can be disposed. It will be appreciated that lengthening the coupling zone 50 can increase the lap shear strength of the joint 18 to a degree, while shortening the coupling zone 50 can decrease the lap shear strength of the joint 18.

As another example, the diametrical clearance can be increased or reduced to a degree for a given adhesive 16 and length L of the coupling zone 50 to affect not only the lap shear strength of the joint 18, but also the peel strength of the adhesive 16. It will be appreciated that lengthening the coupling zone 50 may not necessarily increase the peel strength of the adhesive 16 in some situations, especially when the diametrical clearance is relatively low, as modest axially directed loads transmitted through the joint 18 can cause the adhesive 16 in the zone 50 to elongate significantly. In this regard, we have noted in our testing that when another adhesive coupling system was employed with relatively large diameter tubes and piping, such as a tube or pipe having a nominal diametrical dimension that is greater than or equal to two inches, the typical diametrical clearance employed in such coupling systems was sufficiently small (e.g., 0.005 inch) so that it was possible for the adhesive to elongate significantly (e.g., greater than 20% in some instances) and peel away from the tubing. In systems with relatively large diameter tubes and/or piping, it is possible to transfer heat to/from the tubing/piping relatively quicker than the body of the fitting and consequently, a relatively temperature difference (e.g., 20°F or more) between the tubing/piping and the body of the fitting in the relevant area is possible. We note, too, that where different materials are employed for the tubing/piping and the body of the fitting, differences in rates of thermal expansion can further exacerbate this condition.

We have found, too, that it was not possible to modify this other adhesive coupling system to sufficiently enlarge the diametrical clearance as a portion of the tubing/piping in the body of the fitting was unsupported and would adversely affect the connection. In this regard, we noted that diametrical clearances of 0.030 inch permitted sufficient movement of the tubing/piping relative to the body of the fitting so that line-to-line contact between the tubing/piping and the body of the fitting occurred. As a result of such line-to-line contact and the tendency of the adhesive to flow outwardly along the tubing/piping, it was not possible for the adhesive between the tubing/piping and the body of the fitting to consistently achieve a thickness that effectively achieved a desired peel strength. It will be appreciated that control of the diametrical clearance permits the length L of the coupling zone 50 to be minimized (thereby saving material) while maintaining desired peel and lap shear strengths. In this regard the diametrical clearance can be selected such that the adhesive in the zone 50 is sufficiently thick at all points around its perimeter so as to limit elongation of the adhesive 16 in the zone 50 to inhibit peel failures of the adhesive 16 in the zone 50 and shear failures of the joint 18 when a temperature differential of at least 25°F between a temperature of the body 20 at a location adjacent the zone 50 and a temperature of the structure 12 at a location adjacent the zone 50. In such tests on a joint constructed in accordance with the teachings of the present disclosure, four inch nominal diameter tubing and diametrical clearances of 0.030 inch were employed and elongation of the adhesive was reduced to 10% or less (in some instances, elongation was reduced to 6% for a temperature differential of 35°F).

We have noted that a relatively large diametrical clearance can facilitate the use of different adhesives 16. For example, an adhesive of a first viscosity may be employed if the ambient air temperature is within a first temperature range (e.g., less than 50 degrees F), while a different adhesive of a second, higher viscosity may be employed if the ambient air temperature is within a second temperature range (e.g., greater than or equal to 50 degrees F).

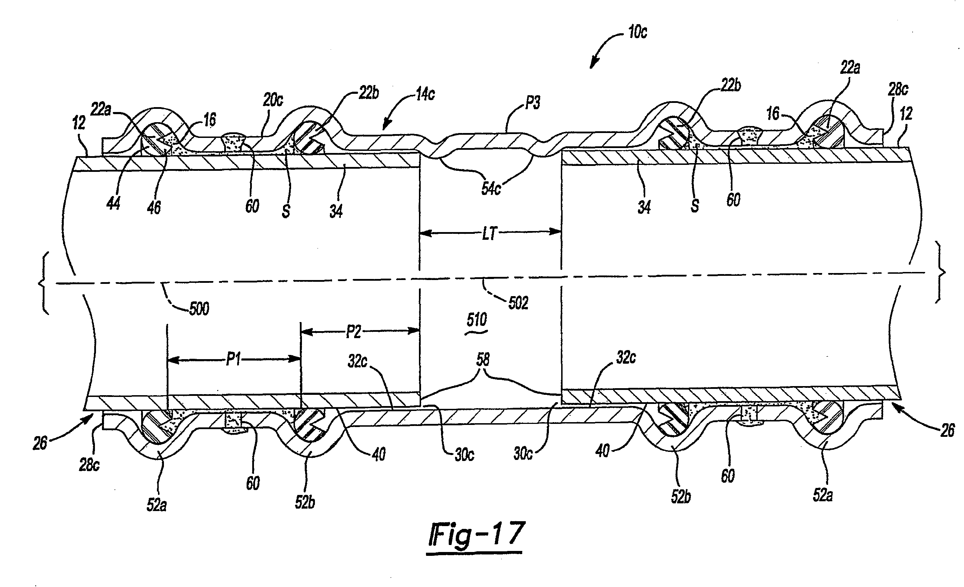

Another assembly 10c constructed in accordance with the teachings of the present disclosure is illustrated in Figure 17. The assembly 10c can include a pair of components or structures 12, a fitting 14c and an adhesive 16. Except as noted below, the fitting 14c can be similar to the fitting 14 described in detail above. Briefly, the fitting 14c can include a body 20c and two pair of sealing elements 22a and 22b. The body 20c can be made from an appropriate structural material, such as copper, and can have a pair of insertion ends 26 (e.g., an inlet and an outlet) that are disposed concentrically about a straight line 500 that is coincident with a longitudinal axis 502 of the body 20c. Those of skill in the art will appreciate that although the particular fitting 14c that is shown is a straight union-type fitting for joining two fluid conduits, the teachings of the present disclosure have application to other types of fittings, such as to T-type fittings. Each insertion end 26 can define an end face 28c and a cavity 30c. The cavity 30c can have an interior surface 32c and can be configured to receive an end 34 of an associated one of the structures 12.

Each pair of sealing elements 22a and 22b can axially spaced apart from one another along the straight line 500. Each pair of sealing elements 22a and 22b can be sized to support the end 34 of the associated structure 12 within the cavity 30c and sealingly engage both the body 20c and the exterior surface 40 of the end 34 of the associated structure 12 so that the exterior surface 40 is spaced apart from the interior surface 32c of the cavity 30c to form an adhesive coupling zone or space S therebetween. In the particular example provided, the sealing elements 22a and 22b are engineered lip seals having a body 44 and a lip member 46 that cooperate to form an annular seal. As the example provided relates to a system for communicating a fluid, the sealing elements 22a and 22b are configured to sealingly engage the interior surface 32c and the exterior surface 40. Those of skill in the art will appreciate from this disclosure that other types of seals, including O-rings, could be employed in the alternative.

The body 20c can include two pair of mounts 52a and 52b and a pair of stops 54c. Each of the mounts 52a and 52b can be spaced axially apart from one another and can be configured to hold and position an associated one of the sealing elements 22a and 22b, respectively. Each of the stops 54c can be a feature that can inhibit the insertion of an associated one of the structures 12 into the cavity 30c beyond a predetermined distance. In the particular example provided, each of the stops 54c comprises a dimple that is formed in the body 20c. The dimple can extend radially inwardly into the cavity 30c to an extent where it will contact the end face 58 of the associated one of the structures 12 to inhibit further insertion of the associated one of the structures 12 into the cavity 30c. The stops 54c can be spaced apart from one another to establish a tube stop zone 510 that is disposed between the end faces 58 of the structures 12. The tube stop zone 510 has a length LT.

The body 20c can also define apertures 60 that can be positioned between the sealing elements 22a and 22b and extend into the cavity 30c. The apertures 60 can be employed for installing the adhesive 16 between the sealing elements 22a and 22b as described in detail above. In this regard, the adhesive 16 can be pumped through one or more of the apertures 60 into the adhesive coupling zone or space S between the exterior surface 40 of the end 34 of the associated structure 12 and the interior surface 32c of the cavity 30c to fixed or fixedly and sealingly couple the body 20c to associated structure 12. Those of skill in the art will appreciate that because the sealing elements 22a and 22b support the ends 34 of the structures 12, the difference between the external diameter of the ends 34 and the internal diameter of the body 20c can be sized so that the adhesive 16 can achieve a desired (wall) thickness, such as about 0.015 inch to about 0.035 inch, preferably about 0.020 inch to about 0.025 inch.

We have identified the length LT of the tube stop zone 510 as having an effect on the operating life of the assembly 10c when the assembly 10c is subjected to thermal cycling. When a tube stop zone 510 of a relatively short length LT is employed, as in Figure 3, heat transfer from the heated fluid passing through the structures 12 to the body 20 of the fitting 14 is significantly impeded due to an insulating effect of the adhesive 16 (Fig. 9) and to an insulating effect of an annular layer of fluid that is disposed between the sealing elements 22b, the exterior surface 40 of the end 34 of the structures 12 and the interior surface 32 of the cavities 30. In this regard, the thermal conductivity of the adhesive 16 (Fig. 9) and the fluid that is transported through the structures 12 (e.g., water) can be approximately three orders of magnitude smaller than the thermal conductivity of the material that forms the structures 12 and the body 20 of the fitting 14 (e.g., the thermal conductivity of water and the adhesive 16 (Fig. 9) can be about 0.6 W/m°K, while the thermal conductivity of the copper that forms the structures 12 and the body 20 of the fitting 14 in the example provided can be about 401 W/ m°K). Consequently, the ends 34 of the structures 12 can be heated from the heated fluid passing therethrough at a rate that is considerably higher than the rate at which the body 20 of the fitting 14 can be heated. As those of skill in the art will appreciate, conventional practice is to configure union-type fittings such that the tubes inserted therein are as close to one another as possible to thereby reduce the amount of material that is used to form the fitting. In systems that employ sweat soldering to secure fittings and tubes to one another, the tubes that are inserted into a union-type fitting are typically positioned such that they nearly touch one another. In systems where the fittings are crimped to the tubes, the positioning of the tubes can be dictated by the width of a crimping tool, but this offset still relatively close as the wall thickness of such fittings is typically larger than the wall thickness of the tubes that are inserted thereto.

The differences between the rates at which heat is transferred to the structures 12 and the body 20 causes the structures 12 and the body 20 to heat (and thus expand) at different rates, which applies a thermally induced shear stress to the adhesive 16 (Fig. 9). Repeated thermal cycling of the assembly 10 (Fig. 1), as when heated fluid is passed through the assembly 10 (Fig. 1) for a period of time and thereafter allowed to cool to ambient air temperature, can effect the lifespan of the adhesive 16 (Fig. 9).

In contrast, the tube stop zone 510 of the fitting 14c of Figure 17 is sized relatively larger in relation to the diameter of the body 20c of the fitting 14c to facilitate improved heat transfer from the heated fluid that passes through the structures 12 into the body 20c so as to reduce the difference between the rates at which the structures 12 and the body 20c expand and contract to thereby reduce the magnitude of the thermally induced shear stress that is applied to the adhesive 16. In this regard, the tube stop zone 510 is sized to reduce or eliminate the insulating effect of the fluid in the area of the tube stop zone 510 as compared to the example of Figure 3 to permit the heated fluid within the structures 12 to more readily transmit heat to the body 20c. The sizing of the tube stop zone 510 preferably balances several design considerations, including the rate of heat transfer through a portion P1 of the body 20c between the sealing elements 22b and the amount of material that is used to form the body 20c.

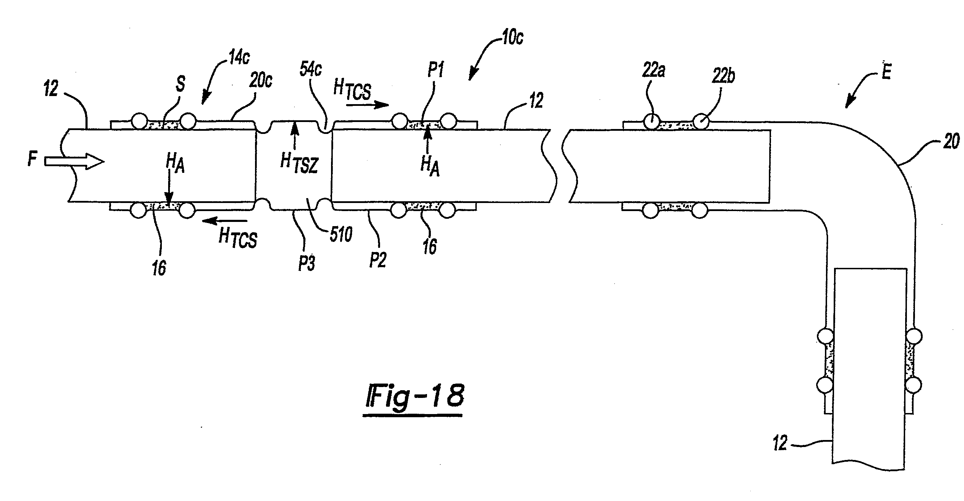

With reference to Figure 18, heat transfer through the assembly 10c is schematically illustrated. Heat can be transferred from the fluid F that is communicated through the structures 12 into the body 20c of the fitting 14c indirectly through the adhesive 16 (as represented by reference character $H_A$), as well as directly (e.g., from the fluid F into the area of the tube stop zone 510 as represented by reference character $H_{TSZ}$). Assuming that the rate of heat transfer associated with $H_{TSZ}$ is greater than the rate of heat transfer associated with $H_A$, heat will flow from the area of the body 20c associated with the tube stop zone 510 in two directions toward the adhesive coupling zones or spaces S as represented by reference character $H_{TCS}$.

The length of the tube stop zone 510 can be sized to draw heat from the fluid F into the portion P3 of the fitting body 20c corresponding to the tube stop zone 510 at a rate that permits the fitting body 20c to heat relatively evenly. For example, if the fluid F that flows through the assembly 10c experiences a change in temperature of 110°F (e.g., water heated to 180°F is circulated through the assembly 10c, the flow of heated water through the assembly 10c is halted, the water in the assembly 10c is permitted to cool to an ambient air temperature of 70°F and thereafter flow of the heated water resumes such that the temperature of the water in the assembly 10c rapidly rises from 70°F to 180°F), the length of the tube stop zone 510 can be sized such that a temperature of a first portion of the fitting body 20c and a temperature of another portion of the fitting body will not be different by more than a predetermined temperature differential, for example 20°F, 15°F or 12°F. Stated another way, the difference between the maximum temperature of the surface of the body 20c and the minimum surface of the temperature of the surface of the body 20c at any given time will not exceed the predetermined temperature differential. The predetermined temperature differential can be any temperature that is less than or equal to a desired maximum temperature differential, such as 30°F.

Techniques such as finite element analysis can be employed to size each of the portions of the body 20c in a way that optimizes various structural, heat transfer and physical (e.g., mass) characteristics to a desired degree. It will be appreciated, however, that other techniques, including calculations and experiments, may be employed to size the body 20c.

For example, the body 20c may be sized by approximating several heat transfer rates. In this methodology, the rate at which heat is transferred into the portion P1 of the body 20c associated with each adhesive coupling zone or space S (from the portion P2 of the body 20c extending between the closest tube stop 54c and the adhesive coupling zone or space S) can be greater than or equal to about three times the rate at which heat is transferred into the body 20c through the adhesive 16 in the adhesive coupling zone or space S (i.e., the rate of $H_{TCS}$ can be greater than or equal to about three time the rate of $H_A$). The tube stop zone 510 can be sized such that the rate of heat transfer into the corresponding portion P3 of the body 20c provides sufficient heat to the portions P2 of the body 20c between the tube stops 54c and their associated sealing element 22b (i.e., the rate of $H_{TSZ}$ can be greater than or equal to twice the race of $H_{TCS}$). In some instances, the length of the adhesive coupling zone or space S is within $\pm 15\%$ of twice the length LT of the tube stop zone 510 (i.e., $1.85 \times LT \leq L \leq 2.15\ LT$).

It will be appreciated that lengthening the distance LT (Fig. 17) of the tube stop zone 510 beyond a given dimension would not provide significant heat transfer benefit. To guard against such situations, it may be desirable to compare the portion of the body 20c in the area of the tube stop zone 510 to a fitting having relatively good heat conducting properties (i.e., a fitting in which the temperature of the surface of the fitting remains fairly uniform when a fluid flowing through the fitting experiences a relatively large change in temperature). In practice, a maximum difference between a maximum temperature and a minimum temperature on the surface of the exemplary fitting at a given time when the fluid flowing through the fitting is experiencing a relatively high change in temperature (e.g., from 70°F to 180°F) can be employed as the predetermined temperature differential that is referenced above.

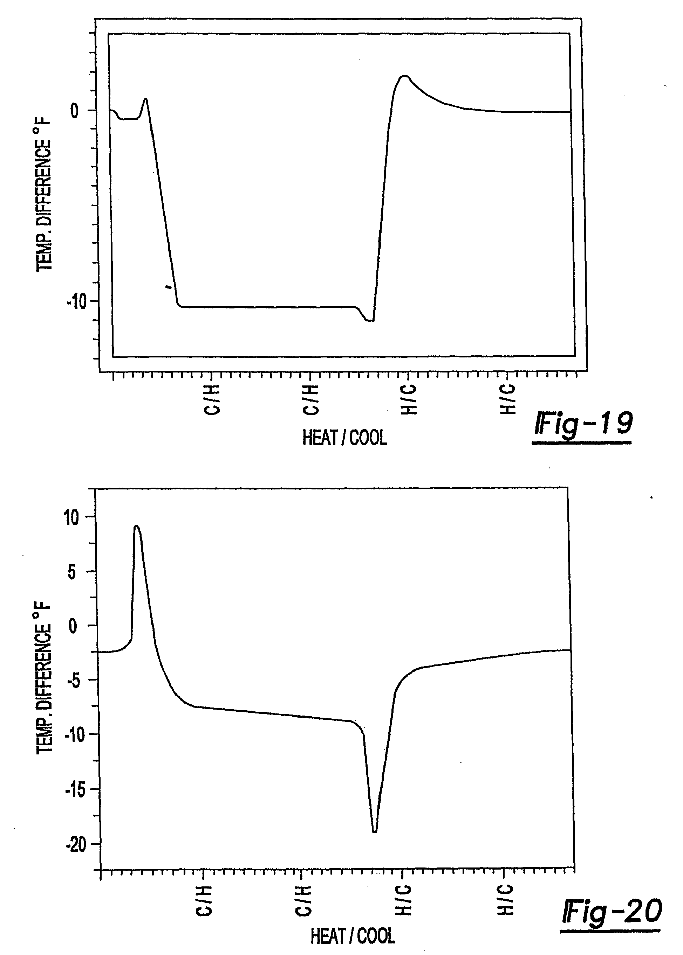

In the particular example provided, we employed a 90°elbow E, but those of skill in the art will appreciate from this disclosure that other fitting types, such as reducing bushing, 45° elbow and portions of a T-fitting may also be useful. A first one of the points is disposed on the body 20 of the exemplary fitting proximate the inlet and between the seals 22a, 22b, while a second one of the points is disposed on the body 20 at a location in which fluid traveling through the body 20 will directly contact an internal surface of the body 20, such as at a location in which the body 20 is defined by a radius. A plot illustrating the data taken during a test of one 90° elbow fitting is illustrated in Figure 19.

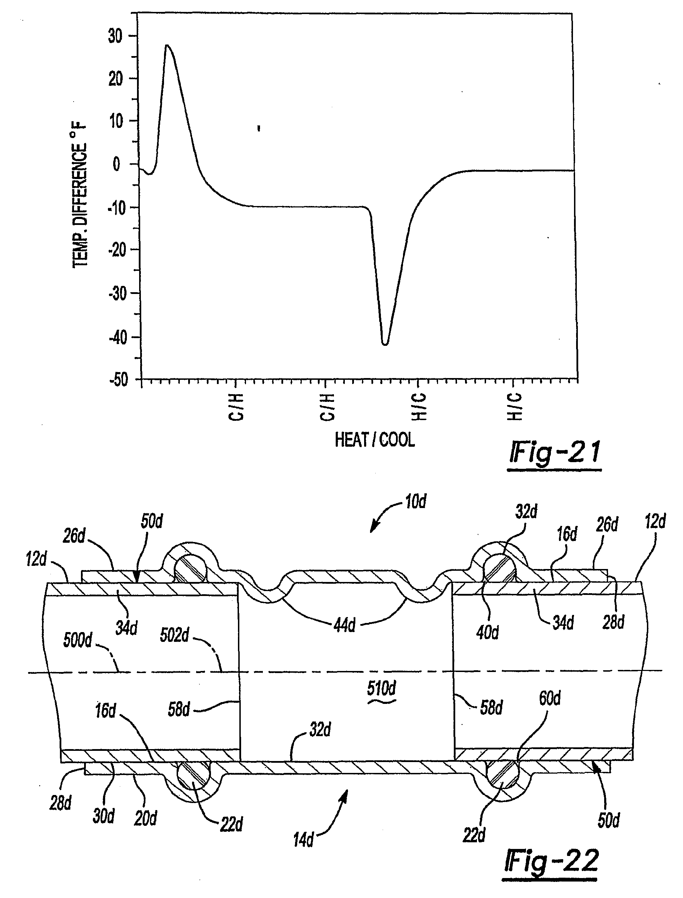

With reference to Figures 18 and 19, a thermal test cycle is conducted on the elbow E to base-line its performance. During the test, the elbow E (with tubes 12 installed to the opposite sides of the elbow E as discussed above) was initially at an ambient temperature of 70°F. Water at 180°F was circulated through the elbow E and tubes 12 and after a predetermined amount of time, the flow of heated water was halted so that the elbow E and tubes 12 could return to the ambient temperature. The temperature at the two above-described points on the body 20 of the elbow was measured with thermocouples to generate the data that is shown in the plot. As is shown, the absolute value of the maximum difference in temperature of the two points on the body 20 of the elbow E was 12°F. The plot of Figure 20 illustrates the performance of the fitting 14c under identical thermal cycling test conditions and illustrates its maximum temperature differential as being less than 20°F. We also tested a union-type fitting that spaced the tubes inserted therein by a conventional distance (i.e., nearly touching) but was otherwise similar to the fitting 14c. Figure 21 illustrates a plot showing the maximum difference in surface temperature of the body of the fitting was nearly 30°F when the fitting was subject to the above-described test conditions.

While we employed thermocouples to verify the performance of particular fittings constructed in accordance with the teachings of the present disclosure, we note that other verification methods could also be employed. For example, thermal imaging techniques, such as a thermogram, can be useful in verifying that a particular fitting 14c performs in a desired manner.

While several approaches may be used to approximate the above-described heat transfer rates, we employed the following three equations in the approach that we utilized.

$$H_A = \frac{TC_A}{1.73} \times \frac{CA_A}{144} \times \frac{12}{T_A} \times \Delta T_1$$

where:

$H_A$ is the rate of heat transfer rate into the portion P1 of the body 20c through the adhesive 16 expressed in BUT/hr;
$TC_A$ is the thermal conductivity of the material that forms the adhesive expressed in W/(m°K);
1.73 is a conversion factor (W/m°K to BTU•ft/hr•ft$^2$•°F);
$CA_A$ is the cross-sectional area of the adhesive 16 on one side of the body 20c taken perpendicular to the direction of the flow of heat through the adhesive in the adhesive coupling zones expressed in square inches;
144 is a conversion factor (square inches to feet);
12 is a conversion factor (inches to feet);
$T_A$ is the thickness of the adhesive over through heat is conducted into the portion P1 of the body 20c through the cross-sectional area of the adhesive 16 in the adhesive coupling zones; and
$\Delta T_1$ is an expected temperature differential of the fluid passing through the assembly 10c and is expressed in °F.

$$H_{TCS} = \frac{TC_F}{1.73} \times \frac{CA_{P2}}{144} \times \frac{12}{L_{P2}} \times \Delta T_1$$

where:

$H_{TCS}$ is the rate of heat transfer rate through the portion P2 of the body 20c to the portion P1 of the body 20c expressed in BUT/hr;
$TC_F$ is the thermal conductivity of the material that forms the body 20c expressed in W/(m°K);
1.73 is a conversion factor (W/m°K to BTU•ft/hr•ft$^2$•°F);
$CA_{P2}$ is the cross-sectional area of the portion P2 of the body 20c taken perpendicular to the direction of the flow of heat that is transmitted from the portion P3 of the body 20c to the portion P1 of the body, the cross-sectional area being expressed in square inches;
144 is a conversion factor (square inches to feet);
12 is a conversion factor (inches to feet);
$L_{P2}$ is the distance over which heat is conducted through the cross-sectional area $CA_{P2}$ (i.e., the length of the portion P2 of the body 20c) expressed in inches; and
$\Delta T_1$ is an expected temperature differential of the fluid passing through the assembly 10c and is expressed in °F.

$$H_{TSZ} = \frac{TC_F}{1.73} \times \frac{CA_{P3}}{144} \times \frac{12}{WT_F} \times \Delta T_2$$

where:

$H_{TSZ}$ is the rate of heat transfer rate from the fluid F into the portion P3 of the body 20c expressed in BUT/hr;

$TC_F$ is the thermal conductivity of the material that forms the body 20c expressed in W/(m°K);

1.73 is a conversion factor (W/m°K to BTU•ft/hr•ft$^2$•°F);

$CA_{P3}$ is the internal surface area of the portion P3 of the body 20c in square inches;

144 is a conversion factor (square inches to feet);

12 is a conversion factor (inches to feet);

$WT_F$ is the wall thickness of the portion P3 of the body 20c; and

$\Delta T_2$ is a desired maximum temperature differential between the maximum and minimum temperatures of the body 20c at any given time.

Example 1-1: 2" Nominal Diameter Copper Tubing

The fitting 14c has a body 20c that is formed of copper, which has a thermal conductivity of 401 W/m°K ($TC_F$ = 401) The body 20c has a nominal internal diameter (NID) of 2.145 inches and a nominal external diameter (NED) of 2.263 inches so that $CA_{P2}$ is 0.409 sq. inches (i.e., $CA_{P2} = 3.14\times[(NED)^2-(NID)^2]\ddot{o}4$) and the wall thickness 0.059 inch ($WT_F = [(NED)-(NID)]/2$). The stops 54c are positioned so that the length LT of the tube stop zone 510 is 0.25 inch, while the portions P2 of the body 20c on opposite sides of the tube stop zone 510 have a length of 0.25 inch (i.e., $L_{P2}$ = 0.25). The cross-sectional area of the portion P3 of the body 20c is 1.634 square inches (i.e., $CA_{P3} = 3.14\times(NID)\times LT$) The ambient air temperature is 70°F, while the temperature of the fluid (water) that passes through the structures 12 is 180°F so that $\Delta T_1$ is equal to 110°F (i.e., $\Delta T_1$ = 180°F - 70°F). The structures 12 have an external diameter (SED) of 2.125 inches so that the adhesive 16 has a thickness of 0.1 inch ($T_A = [(NID)-(SED)]/2$). The adhesive 16 has a thermal conductivity of 0.6 W/m°K ($TC_A$ = 0.6) and is disposed over a distance LL of 0.553 inch on each side of the body 20c. The cross-sectional area of the adhesive ($CA_A$) is 3.69 sq. inches (i.e., $CA_A =3.14\times SED\times LL$). A maximum desired temperature differential across the surface of the body 20c is 12°F (i.e., $\Delta T_2$ = 12°F). The heat transfer rate $H_{TCS}$ is approximately 3470 BTU/hr, while the heat transfer rate $H_A$ is approximately 587 BTU/hr and the heat transfer rate $H_{TSZ}$ is approximately 6415 BTU/hr. Accordingly the magnitude of the heat transfer rate $H_{TCS}$ is about 5.9 times the magnitude of the heat transfer rate $H_A$ and the magnitude of the heat transfer rate $H_{TSZ}$ is about 1.91 times the magnitude of the heat transfer rate $H_{TCS}$.

Example 1-2: 3" Nominal Diameter Copper Tubing

The fitting 14c has a body 20c that is formed of copper, which has a thermal conductivity of 401 W/m°K. The body 20c has a nominal internal diameter of 3.149 inches and a nominal external diameter of 3.299 inches. The stops 54c are positioned so that the length of the tube stop zone 510 is 0.3 inch, while the portions P2 of the body 20c on opposite sides of the tube stop zone 510 have a length of 0.375 inch. The ambient air temperature is 70°F, while the temperature of the fluid (water) that passes through the structures 12 is 180°F. The structures 12 have an external diameter of 3.125 inches. The adhesive 16 has a thermal conductivity of 0.6 W/m°K and is disposed over a distance of 0.644 on each side of the body 20c. A maximum desired temperature differential across the surface of the body 20c is 12°F. The heat transfer rate $H_{TCS}$ is approximately 4302 BTU/hr, while the heat transfer rate $H_A$ is approximately 1006 BTU/hr and the heat transfer rate $H_{TSZ}$ is approximately 9168 BTU/hr. Accordingly the magnitude of the heat transfer rate $H_{TCS}$ is about 4.3 times the magnitude of the heat transfer rate $H_A$ and the magnitude of the heat transfer rate $H_{TSZ}$ is about 2.13 times the magnitude of the heat transfer rate $H_{TCS}$.

Example 1-3: 4" Nominal Diameter Copper Tubing

The The fitting 14c has a body 20c that is formed of copper, which has a thermal conductivity of 401 W/m°K. The body 20c has a nominal internal diameter of 4.158 inches and a nominal external diameter of 4.358 inches. The stops 54c are positioned so that the length of the tube stop zone 510 is 0.4 inch, while the portions P2 of the body 20c on opposite sides of the tube stop zone 510 have a length of 0.50 inch. The ambient air temperature is 70°F, while the temperature of the fluid (water) that passes through the structures 12 is 180°F. The structures 12 have an external diameter of 4.125 inches. The adhesive 16 has a thermal conductivity of 0.6 W/m°K and is disposed over a distance of 0.7 inch on each side of the body 20c. A maximum desired temperature differential across the surface of the body 20c is 14°F. The heat transfer rate $H_{TCS}$ is approximately 5682 BTU/hr, while the heat transfer rate $H_A$ is approximately 961 BTU/hr and the heat transfer rate $H_{TSZ}$ is approximately 14123 BTU/hr. Accordingly the magnitude of the heat transfer rate $H_{TCS}$ is about 5.9 times the magnitude of the heat transfer rate $H_A$ and the magnitude of the heat transfer rate $H_{TSZ}$ is about 2.49 times the magnitude of the heat transfer rate $H_{TCS}$.

Example 1-4: 1.5" Nominal Diameter Copper Tubing

The fitting 14c has a body 20c that is formed of copper, which has a thermal conductivity of 401 W/m°K. The body 20c has a nominal internal diameter of 1.640 inches and a nominal external diameter of 1.742 inches. The stops 54c are positioned so that the length of the tube stop zone 510 is 0.25 inch, while the portions P2 of the body 20c on opposite sides of the tube stop zone 510 have a length of 0.25 inch. The ambient air temperature is 70°F, while the temperature of the fluid (water) that passes through the structures 12 is 180°F. The structures 12 have an external diameter of 1.625 inches. The adhesive 16 has a thermal conductivity of 0.6 W/m°K and is disposed over a distance of 0.33 inch on each side of the body 20c. A maximum desired temperature differential across the surface of the body 20c is 12°F. The heat transfer rate $H_{TCS}$ is approximately 2302 BTU/hr, while the heat transfer rate $H_A$ is approximately 535 BTU/hr and the heat transfer rate $H_{TSZ}$ is approximately 5851 BTU/hr. Accordingly the magnitude of the heat transfer rate $H_{TCS}$ is about 4.3 times the magnitude of the heat transfer rate $H_A$ and the magnitude of the heat transfer rate $H_{TSZ}$ is about 2.54 times the magnitude of the heat transfer rate $H_{TCS}$.

Example 1-5: 1.25" Nominal Diameter Copper Tubing

The fitting 14c has a body 20c that is formed of copper, which has a thermal conductivity of 401 W/m°K. The body 20c has a nominal internal diameter of 1.390 inches and a nominal external diameter of 1.478 inches. The stops 54c are positioned so that the length of the tube stop zone 510 is 0.175 inch, while the portions P2 of the body 20c on opposite sides of the tube stop zone 510 have a length of 0.25 inch. The ambient air temperature is 70°F, while the temperature of the fluid (water) that passes through the structures 12 is 180°F. The structures 12 have an external diameter of 1.375 inches. The adhesive 16 has a thermal conductivity of 0.6 W/m°K and is disposed over a distance of 0.340 inches on each side of the body 20c. A maximum desired temperature differential across the surface of the body 20c is 12°F. The heat transfer rate $H_{TCS}$ is approximately 1684 BTU/hr, while the heat transfer rate $H_A$ is approximately 467 BTU/hr and the heat transfer rate $H_{TSZ}$ is approximately 4024 BTU/hr. Accordingly the magnitude of the heat transfer rate $H_{TCS}$ is about 3.6 times the magnitude of the heat transfer rate $H_A$ and the magnitude of the heat transfer rate $H_{TSZ}$ is about 2.39 times the magnitude of the heat transfer rate $H_{TCS}$.

Another assembly 10d constructed in accordance with the teachings of the present disclosure is illustrated in Figure 22. Except as noted herein, the assembly 10d can be generally similar to the assembly that is disclosed in copending U.S. Patent Application No. 11/256,596, the disclosure of which is hereby incorporated by reference as if fully set forth in detail herein. Briefly, the assembly 10d can include a pair of structures 12d, a fitting 14d and an adhesive 16d. The fitting 14d can include a body 20d and a pair of spacing elements 22d. In the example provided, the structures 12d are copper tubes and the body 20d is formed of copper. Those of skill in the art will appreciate that other materials could be employed for one or more of the structures 12d and the body 20d. The body 20d can include a pair of insertion ends 26d (i.e., an inlet and an outlet) that can be disposed concentrically about a straight line 500d that is coincident with a longitudinal axis 502 of the body 20d. Each insertion end 26d can define an end face 28d and a cavity 30d having an interior surface 32d. The cavity 30d can be configured to receive an end 34d of an associated one of the structures 12d. The body 20d can also define a pair of stops 44d that can be spaced apart from one another to establish a tube stop zone 510d that is disposed between the end faces 58d of the structures 12d that are inserted into the body 20d.

The spacing elements 22d can be housed in the body 20d and can contact the interior surface 32d of the cavity 30. Each of the spacing elements 22d can be an "endless" member, such as an O-ring, and can contact the interior surface 32d in a continuous (i.e., unbroken) manner about the perimeter of the cavity 30d. Alternatively, the spacing element 22d could be formed in a discontinuous manner (e.g., with a plurality of voids) so as to contact the interior surface 32d in a correspondingly discontinuous manner. Moreover, the spacing elements 22d can be formed from a resilient or deformable material. The spacing elements 22d can be spaced axially apart from the end faces 28d to define a pair of adhesive coupling zones 50d.

The interior surface 32d of the cavity 30d and/or the exterior surface 40d of the structure 12d may undergo a surface treatment, such as mechanical or chemical cleaning prior to the application of the adhesive 16d to promote bonding and sealing. The adhesive 16d can be applied to the interior surface 32d of the cavity 30d and/or to the exterior surface 40d of the structure 12d (i.e., proximate the end face of the portion of the structure 12d that is to be inserted into the cavity 30d). In our testing, the adhesive 16d was applied in to the interior surface 32d in a continuous annular (circular) bead, and to the exterior surface 40d of the structure 12d in a continuous annular (circular) bead for some samples and in a continuous zigzag bead (e.g., a series of several "W" shapes about the perimeter of the associated end 34d of the structure 12d, with each "W" shape touching adjacent "W" shapes) for other samples. Thereafter, the structures 12d were inserted to the cavity 30d.

The spacing element 22d can collect a portion of the adhesive 16d (that is wiped off the portion of the associated end 34d of the structure 12) that slides by the spacing element 22d, causing the adhesive 16d to form a band of adhesive 60d that abuts the spacing element 22d, the body 20d and the structure 12d. As the band of adhesive 16d is continuous about the perimeter of the connection between the body 20d and the structure 12d, it will be appreciated that its presence ensures a fluid-tight connection between the body 20d and the structure 12. Moreover, the presence of the spacing element 22d, the application of shear forces to the liquid adhesive 16d (caused by the sliding action between the structure 12d and the fitting 14d), or both, can cause the adhesive 16d to flow backward along the structure 12d as the structure 12d is slid into the body 20d. The backward flow of adhesive 16d can completely fill the space between the exterior surface 40d of the structure 12d and the interior surface 32d of the cavity 30d in the coupling zone 50d so that maximum mechanical coupling can be achieved between the structure 12d and the fitting 14d.

The tube stop zone 510d is sized to permit heated fluid within the structures 12d to more readily transmit heat to the body 20d. The tube stop zone 510d can be sized such that heat is transferred from the portion of the body 20d of the fitting 14d corresponding to the tube stop zone 510d at a first heat transfer rate that is greater than three times a second heat transfer rate at which heat is transferred through the adhesive 16d to the fitting 14d.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, the mixing and matching of features, elements and/or functions between various examples is expressly contemplated herein, even if not specifically shown or described, so that one of ordinary skill in the art would appreciate from this disclosure that features, elements and/or functions of one example may be incorporated into another example as appropriate, unless described otherwise, above. Moreover, many modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims.

**Claims**

1.   A method for forming a joint comprising:

   providing a fitting having a body and a pair of axially spaced apart seals, wherein the body has an insertion end;
   providing a structure;
   engaging the fitting and the structure to one another such that the seals sealing engage the body and the structure; and
   after the fitting and the structure have been engaged to one another, installing an adhesive to a zone disposed between the body, the structure and the seals to retain the body to the structure.

2.   A method as claimed in Claim 1, wherein prior to engaging the fitting and the structure to one another the method further comprises: forming a locking element on at least one of the body and the structure, wherein the locking element is positioned in the zone and is configured to receive a portion of the adhesive installed to the zone.

3.   A method as claimed in Claim 2, wherein the locking element is selected from a group consisting of dimples, knurls and grooves.

4.   A method as claimed in any preceding Claim, wherein installing the adhesive includes pumping the adhesive through a fill aperture into the zone.

5.   A method as claimed in Claim 4, wherein installing the adhesive further includes verifying that the adhesive has exited a vent aperture.

6.   A method as claimed in any preceding Claim, wherein a dimension of the zone between the body and the structure is sufficiently thick at all points around a perimeter of the zone so as to limit elongation of the adhesive in the zone to inhibit peel and shear failures of the adhesive in the zone when a temperature differential of at least 25°F between a temperature of the body at a location adjacent the zone and a temperature of the structure at a location adjacent the zone.

7.   A method as claimed in any preceding Claim, wherein the structure is disposed in a generally vertical orientation and wherein dry friction between the seals and the structure are sufficient to retain the fitting and the structure to one another while the adhesive in the zone cures.

8. A method as claimed in any preceding Claim, wherein prior to installing the adhesive the method further comprises: selecting the adhesive from a group of adhesives having different viscosities, wherein the selection is at least partly based on an ambient air temperature.

9. A method as claimed in any of Claims 1 to 3, wherein the adhesive does not bond to either of the body and the structure.

10. A fitting comprising:

a body having an insertion end with an end face, wherein the body defines a cavity with a first mount, a second mount, a fill aperture and a vent aperture, wherein the second mount is spaced axially apart from the first mount; a first seal received in the first mount; and a second seal received in the second mount, wherein the fill aperture and the vent aperture extend radially through the body and wherein the fill aperture and the vent aperture are disposed between the first and second seals.

11. A fitting as claimed in Claim 10, wherein at least one of the first and second seals is a lip seal.

12. A method for forming a fitting for coupling a pair of tubes along a straight axis, wherein the fitting comprises a fitting body with a pair of opposite ends and at least one stop between the opposite ends and an adhesive coupling zone being associated with each of the opposite ends, wherein each of the tubes is adapted to be received in an associated one of the ends and adhesively bonded to the fitting body over at least a portion of an associated one of the adhesive coupling zones, wherein the method comprises:

selecting a length of the adhesive coupling zones; determining a first rate of heat transfer through an adhesive in one of the adhesive coupling zones based in part on a first predetermined temperature differential; sizing a first portion of the fitting body between the one of the adhesive coupling zones and the at least one tube stop such that a second rate of heat transfer through the first portion of the fitting body is greater than or equal to two times the first rate of heat transfer, wherein the second rate of heat transfer is based in part on the first predetermined temperature differential; and forming the at least one tube stop to space the tubes axially apart from one another to create a tube stop zone, wherein the tube stop zone has a length such that a third rate of heat transfer through a second portion of the fitting body associated with the tube stop zone is greater than or equal to two times the second rate of heat transfer, wherein the third rate of heat transfer is based in part on a second predetermined temperature differential that is less than the first predetermined temperature differential.

13. A method as claimed in Claim 12, wherein the first predetermined temperature differential is 110°F.

14. A method as claimed in Claim 13, wherein the second predetermined temperature differential is less than or equal to 15°F.

15. A method as claimed in Claim 14, wherein the second predetermined temperature differential is less than or equal to 12°F.

*Fig-1*

*Fig-2*

Fig-3

Fig-4

EP 2 159 464 A2

_Fig-5_

_Fig-6_

_Fig-7_

_Fig-8_

_Fig-9_

*Fig-10*

_Fig-11_

_Fig-12_

**Fig-13**

Fig-14

Fig-15

Fig-16

*Fig-17*

_Fig-18_

EP 2 159 464 A2

_Fig-19_

_Fig-20_

*Fig-21*

*Fig-22*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 256596 A